# EUROPÄISCHE PATENTSCHRIFT

(11) **EP 1 396 184 B1**
(45) Veröffentlichungstag und Bekanntmachung des Hinweises auf die Patenterteilung: **05.04.2006**
(21) Anmeldenummer: 03019110.0
(22) Anmeldetag: 23.08.2003
(51) Int. Cl.: A01D 41/127, A01F 29/20

(54) **Vorrichtung zum Zerkleinern von landwirtschaftlichem Erntegut**
Device for chopping crop
Dispositif pour le broyage de produits de récolte

(30) Priorität: 06.09.2002 DE 10241788
(43) Veröffentlichungstag der Anmeldung: 10.03.2004
(73) Patentinhaber: CLAAS Selbstfahrende Erntemaschinen GmbH, 33428 Harsewinkel (DE)
(72) Erfinder: Weigelt, Horst, Dr., 33332 Gütersloh (DE)

(56) Entgegenhaltungen:
- EP-A- 0 843 959
- EP-A- 1 166 619
- US-A- 3 606 742
- US-A- 4 527 241
- US-A1- 2001 037 638
- US-A1- 2002 137 556

## Beschreibung

Die vorliegende Erfindung betrifft eine Vorrichtung zum Zerkleinern von landwirtschaftlichem Erntegut nach dem Oberbegriff des Anspruchs 1. Eine solche Vorrichtung ist aus EP 0 843 959 A1 bekannt. Sie ist u.a. für die Zerkleinerung von Futterpflanzenmaterial für die Silofuttererzeugung einsetzbar.

Um einen guten Luftabschluss für die bei der Silage stattfindenden Gärprozesse zu erreichen, muss das von der Vorrichtung zerkleinerte Futtermaterial verdichtet werden. Dies geschieht z.B., indem das Material in einen Flachsilo geladen und dann mehrmals mit einem Schlepper überfahren wird. Ein Parameter, der die Verdichtbarkeit des Materials maßgeblich beeinflusst, ist dessen Feuchtegehalts. Je trockener das Material ist, umso schwieriger ist es, es zu verdichten. Um bei trockenem Material eine befriedigende Verdichtbarkeit zu erreichen, muss es feiner zerkleinert werden als feuchtes.

Es wäre zwar denkbar, das Erntegut unabhängig von seinem Feuchtegehalt so fein zu zerkleinern, dass sich auch dann eine befriedigende Verdichtbarkeit ergibt, wenn das Material trocken ist. Eine solche Vorgehensweise ist aber zum einen unwirtschaftlich, weil Energie vergeudet wird, wenn feiner als nötig zerkleinert wird, zum anderen beeinträchtigt eine zu feine Zerkleinerung bei feuchtem Material dessen Handhabbarkeit. Außerdem ist die Verwertung des aus dem Erntegut enthaltenem Futtermaterial durch Tiere beeinträchtigt, wenn eine Teilchengröße von ca. 8 bis 12 mm unterschritten wird.

Um gleichzeitig gute Silageeigenschaften des zerkleinerten Ernteguts zu erreichen und eine übermäßige Zerkleinerung zu vermeiden, wäre es im Prinzip denkbar, von zu verarbeitendem Pflanzenmaterial zunächst eine Probe vom Feld zu nehmen, diese zu häckseln und auf ihre Verdichtbarkeit zu untersuchen, und anschließend mit einer anhand der Untersuchungsergebnisse festgelegten Häcksellänge das Feld abzuernten. Abgesehen davon, dass ein solches Vorgehen einen prohibitiven Zeitaufwand erfordern würde, führt es letztlich auch nicht mit Gewissheit zum Ziel, weil sich zwischen Probennahme und Aberntung der Feuchtegehalt des Pflanzenmaterials bereits wieder geändert haben kann und weil durch Bodeneigenschaften bedingte Fluktuation des Feuchtegehalts auf dem Feld nicht berücksichtigt werden können. Letztlich bleibt mit der gegenwärtigen Technik nur die Möglichkeit, in Anbetracht des Pflanzenmaterials, wie es auf dem Feld steht, eine vermutlich geeignete Häcksellänge abzuschätzen, das Material einzubringen, zu zerkleinern und darauf zu vertrauen, dass es sich hinterher in geeigneter Weise verdichten lassen wird. Diese Abschätzung erfordert ein hohes Maß an Erfahrung, und, wenn sie im Laufe des Ernte- und Zerkleinerungsvorgangs angepasst werden muss, auch die ständige Aufmerksamkeit der die Vorrichtung bedienenden Person.

Aufgabe der Erfindung ist, diesem Nachteil abzuhelfen und eine Vorrichtung zum Zerkleinern von landwirtschaftlichem Erntegut zu schaffen, die zuverlässig die Erzeugung von reproduzierbar verdichtbarem Häckselgut für die Silage ermöglicht.

Die Aufgabe wird gelöst durch ein Verfahren mit den Merkmalen des Anspruchs 1 bzw. eine Vorrichtung mit den Merkmalen des Anspruchs 7. Durch Erfassen eines mit der Verdichtbarkeit des Ernteguts verknüpften Parameters während des Häckselvorgangs ist eine zeitnahe Regelung der Häckselteilchengröße realisierbar, die ein fertiges Häckselgut mit gleichbleibender Verdichtbarkeit ergibt.

Ein wichtiger, mit der Verdichtbarkeit des Ernteguts zusammenhängender Parameter ist dessen Feuchtegehalt, so dass als Sensor zweckmäßigerweise ein Feuchtesensor vorgesehen wird. Ein weiterer Parameter ist selbstverständlich die Art des Ernteguts. Diese ist in gewissem Umfang automatisch erfassbar, da für die Ernte unterschiedlicher Arten von Futterpflanzen unterschiedliche Typen vom Sammelwerkzeug zur Verfügung stehen. Ein Sensor, der ausgelegt ist, um den Typ des an die erfindungsgemäße Vorrichtung montierten Sammelwerkzeugs zu erfassen, erlaubt daher ein Rückschluss auf die Art des zu verarbeitenden Ernteguts und infolgedessen eine automatische Anpassung der Häckselteilchengröße an die Art des Erntegutes.

Die Erfassung des Parameters sowie die Regelung der Teilchengröße anhand des erfassten Parameterwerts können kontinuierlich oder in vorgegebenen Zeitabständen statt finden.

Ergänzend zur automatischen Steuerung der Häckselteilchengröße ist vorzugsweise auch die Möglichkeit der manuellen Steuerung durch einen Benutzer vorgesehen, wobei in diesem Fall sinnvollerweise eine Anzeigevorrichtung zum Anzeigen des erfassten Parameterwerts vorgesehen ist, die dem Benutzer die Auswahl einer geeigneten Häckselteilchengröße erleichtert.

Wenn der erfasste Parameter eine quantitative Größe wie eben der Feuchtegehalt ist, so ist es außerdem zweckmäßig, wenn ein funktionaler Zusammenhang zwischen dem erfassten Wert des Parameters und der von der Steuereinrichtung anhand des Parameterwerts eingestellten Teilchengröße durch einen Benutzer veränderbar ist. So kann lokalen Faktoren des Klimas und des Bodens Rechnung getragen werden, die das Wachstum der Futterpflanzen beeinflussen.

Bei einem Zerkleinerungswerkzeug mit beweglichen, insbesondere rotierenden Messern kann die Steuereinrichtung die Häckselteilchengröße beeinflussen durch Einstellen der Geschwindigkeit der Messer anhand des erfassten Parameters. Eine andere Möglichkeit ist, anhand des erfassten Parameters die Fördergeschwindigkeit von Fördereinrichtungen zu regeln, die das zu zerkleinernde Erntegut den Messern zuführen.

Üblicherweise verfügen herkömmliche Feldhäcksler über eine auf das zerkleinerte Erntegut wirkende Fördereinrichtung, auch als Nachbeschleuniger bezeichnet, die das Auswerfen des Ernteguts aus der Vorrichtung unterstützt. Auch deren Förderleistung bzw. -geschwindigkeit kann zweckmäßigerweise anhand des erfassten Parameters geregelt werden. So ist es insbesondere zweckmäßig, die Leistung dieser Fördereinrichtung umso höher zu regeln, je höher der erfasste Feuchtigkeitsgehalt ist. So wird einerseits bei sehr trockenem Erntegut verhindert, dass dieses versehentlich über einen Sammelbehälter hinausgeschleudert wird, während bei hohem Feuchtigkeitsgehalt eine hohe Förderleistung hilft, zu verhindern, dass das evtl. klebrige Häckselmaterial sich im Förderkanal absetzt und diesen verstopft.

Weitere Merkmale und Vorteile der Erfindung ergeben sich aus der nachfolgenden Beschreibung eines Ausführungsbeispiels mit Bezug auf die beigefügten Figuren. Es zeigen:
- Fig. 1: eine schematische Seitenansicht eines selbstfahrenden Feldhäckslers, an dem die Erfindung verwirklicht ist;
- Fig. 2: einen schematischen Schnitt durch den Förderkanal des Feldhäckslers; und
- Fig. 3: ein Beispiel einer Anzeigeeinrichtung, die einem Benutzer die spezifische Optimierung der Häckselteilchengröße gestattet.

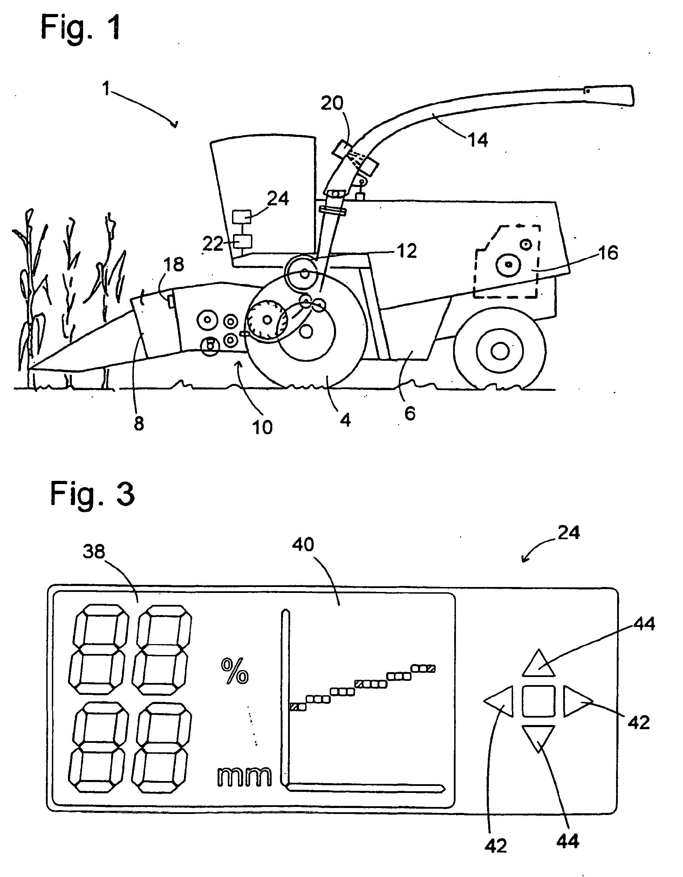

Fig. 1 zeigt eine schematische Darstellung eines selbstfahrenden Feldhäckslers 1 als Beispiel für eine erfindungsgemäße Vorrichtung. Der Feldhäcksler 1 ist ausgestattet mit einem Fahrwerk 4, einem Fahrzeugrahmen 6, einem vorn am Fahrzeugrahmen 6 montierten Aufnahmevorsatz 8, der zum Aufnehmen von Erntegut vom Boden und zum Einspeisen des Materials in einen Förderkanal dient, sowie einem Häckselwerk 10, einem Nachbeschleuniger 12 und einem Auswurfkrümmer 14, die nacheinander an dem Förderkanal angeordnet sind, und einem Motor 16 zum Antrieb des Fahrwerks 4 sowie der beweglichen Teile des Aufnahmevorsatzes 8, des Häckselwerks 10 und des Nachbeschleunigers 12.

Der Aufnahmevorsatz 8 des Feldhäckslers 1 ist austauschbar. In Fig. 1 ist der Aufnahmevorsatz ein Maisgebiss. An seiner Stelle können andere Typen von Vorsatz, z.B. zum Mähen stehender Grünpflanzen oder zum Aufsammeln von in Schwaden liegendem Heu, montiert werden. Ein Sensor 18 zum Erfassen des Typs des montierten Vorsatzes ist an einer geeigneten Kupplungsstelle zwischen dem Feldhäcksler 1 und dem Vorsatz 8 montiert.

Des Weiteren ist ein Feuchtigkeitssensor 20 zum Erfassen des Feuchtigkeitsgehaltes des Ernteguts vorgesehen. Der Feuchtigkeitssensor 20 ist beim hier gezeigten Beispiel am Auswurfkrümmer 14 angebracht. Er könnte auch an anderer Stelle des Förderkanals angebracht sein, vorzugsweise allerdings im hinter dem Hächselwerk liegenden Teil, wo er den zerkleinerten Erntegutstrom überwachen kann. Dieser Feuchtigkeitssensor 20 basiert z.B. auf dem in EP 0 843-959 A1 beschriebenen Prinzip der Messung der Mikrowellenabsorption.

Beide Sensoren 18, 20 sind mit einer Steuerschaltung 22 verbunden, an die auch eine Anzeige 24 in der Fahrerkanzel des Feldhäckslers 1 angeschlossen ist.

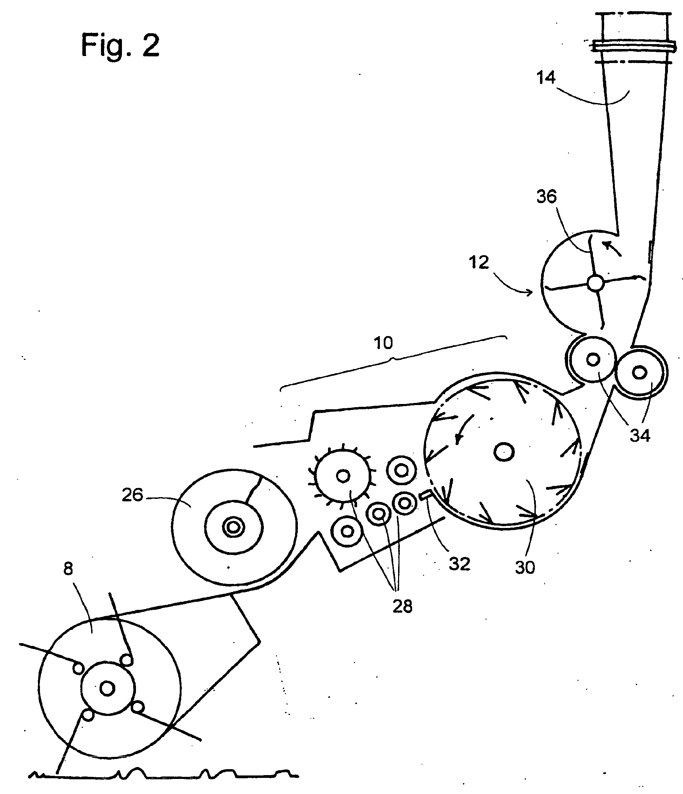

Fig. 2 zeigt detaillierter den Aufbau des Förderkanals, auf dem das Erntegut den Feldhäcksler 1 durchläuft. Als Aufnahmevorsatz 8 ist in dieser Figur anstelle des Maisgebisses ein Aufnehmer oder Pickup für Heu gezeigt, dessen rotierende Rechen lose am Boden liegendes Heu aufnehmen und Querförderschnecken 26 zuführen. Die zwei auf einer gleichen Achse rotierenden, spiegelbildlichen Querförderschnecken 26 führen das vom Aufnahmevorsatz 8 auf einer Breite von je nach Art des Vorsatzes bis zu mehreren Metern gesammelte Erntegut auf die Breite der sich anschließenden Teile des Förderkanals zusammen. Einzugs- und Vorpresswalzen 28 verdichten das Erntegut und führen es mit einer zu ihrer Drehzahl ω proportionalen Geschwindigkeit v einer Häckseltrommel 30 zu. Diese ist mit einer zweiten Drehzahl Ω angetrieben und trägt eine Vielzahl von rotierenden Messern, die das Erntegut jeweils in Höhe eines Gegenhalters 32 abschneiden und weiterfördern. Die dabei resultierende Häckselteilchengröße ist abhängig von den Drehzahlen ω, Ω, dem Umfang der Walzen 28 und der Zahl der Messer der Häckseltrommel 30.

Das auf diese Weise zerkleinerte Erntegut erreicht zwei Konditionierwalzen 34, die zum Aufschlagen von evtl. im Erntegut enthaltenen Körnern, insbesondere von Maiskörnern, dienen. Wenn das Erntegut frei von aufzuschlagenden Körnern ist, können die Konditionierwalzen 34 fehlen oder aus dem Förderkanal herausgestellt sein.

Der im Anschluss an die Konditionierwalzen 34 platzierte Nachbeschleuniger 12 hat eine Mehrzahl von rotierenden Schaufeln 36, die das zerkleinerte Erntegut durch unmittelbaren Kontakt sowie durch eine von ihnen erzeugte Luftströmung in den Auswurfkrümmer 14 hinein beschleunigen.

Auf dem Weg durch den Auswurfkrümmer 14 passiert das Erntegut den Feuchtigkeitssensor 20, der einen Feuchtigkeitsmesswert an die Steuerschaltung 22 liefert. Die Steuerschaltung 22 kann z.B. als Mikroprozessor ausgebildet sein, der programmiert ist, um anhand des vom Feuchtigkeitssensor 20 gemeldeten Feuchtigkeitswerts und der Art des Ernteguts, die sich aus dem vom Typ-Sensor 18 erfassten Typ des Aufnahmevorsatzes 8 ergibt, eine Häcksellänge für das Erntegut auszuwählen. Die Auswahl kann durch Berechnen des Wertes einer Funktion mit dem gemessenen Feuchtigkeitswert als quantitatives Argument und dem Typ des Vorsatzes als qualitatives Argument erfolgen, auch die Verwendung einer in einem Speicher der Steuerschaltung 22 abgelegten Nachschlagetabelle kommt in Betracht. Die ausgewählte Teilchengröße gibt ein Verhältnis zwischen der Fördergeschwindigkeit v des Ernteguts an den Einzugs- und Vorpresswalzen 28 zur Drehgeschwindigkeit Ω der Häckseltrommel 30 vor. Wenigstens einer dieser beiden Parameter ist durch die Steuerschaltung 22 regelbar, um die Häckselteilchengröße gemäß der vorgegebenen Funktion an die gemessene Feuchtigkeit anzupassen.

Die Steuerung der Häckselteilchengröße erfolgt zwar anhand eines Messwerts, der an bereits gehäckseltem Material gewonnen ist, doch ist dies nicht weiter störend, da davon ausgegangen werden kann, dass der Feuchtigkeitsgehalt des geernteten Materials sich während des Erntevorgangs nur langsam ändert, so dass sich der Feuchtigkeitsgehalt des Materials, an dem die Messung stattfindet, nicht wesentlich von dem des Materials unterscheidet, das sich zum gleichen Zeitpunkt im Häckselwerk 10 befindet. Selbstverständlich wäre es auch denkbar, den Feuchtigkeitsgehalt des Ernteguts noch vor dessen Eintritt in das Häckselwerk zu messen, doch hat die hier gewählte Anordnung des Feuchtigkeitssensors 20 den Vorteil, dass aufgrund der Häckselungder Gutstrom, an dem die Messung durchgeführt wird, relativ homogen ist und daher eine zuverlässigere Messung erlaubt, als dies vor dem Häckselwerk 10 möglich wäre.

Die Steuerschaltung 22 nutzt den vom Feuchtigkeitssensor 20 gelieferten Messwert ferner, um die Förderleistung des Nachbeschleunigers 12 zu regeln. Dessen Förderleistung, insbesondere die von ihm im Auswurfkrümmer 14 erzeugte Strömungsgeschwindigkeit der Luft, sollte nämlich zweckmäßigerweise mit dem Feuchtigkeitsgehalt des Ernteguts variieren. Wenn es sich bei dem Erntegut um gut ausgetrocknetes Heu handelt, genügt eine niedrige Strömungsgeschwindigkeit im Auswurfkrümmer 14, um das gehäckselte Heu auf den Ladebereich eines von dem Feldhäcksler gezogenen oder neben ihm fahrenden Transportfahrzeugs auszugeben; eine unangepasst hohe Strömungsgeschwindigkeit würde hingegen dazu führen, dass ein Großteil des Heus über den Ladebereich hinausfliegt und verloren geht. Umgekehrt ist bei feuchtem und damit relativ schwerem Erntegut eine höhere Strömungsgeschwindigkeit erforderlich, damit das Erntegut von dem Luftstrom durch den Auswurfkrümmer 14 ausgetragen wird, ohne stellenweise steckenzubleiben, zu verklumpen und den Auswurfkrümmer im Laufe der Zeit zu verstopfen. Diese Regelung kann stattfinden, indem die Steuerschaltung 22 die Drehgeschwindigkeit des Nachbeschleunigers 12 mit steigendem gemessenem Feuchtigkeitsgehalt hochregelt, oder in dem sie den Nachbeschleuniger 12 je nach Feuchtigkeitsgehalt aus seitlicher Richtung, quer zu seiner Drehachse, mehr oder weniger tief in den Förderkanal hineinfährt.

Der Funktionszusammenhang, nach dem die Steuerschaltung 22 die Häcksellänge und die Leistung des Nachbeschleunigers 36 feuchtigkeitsabhängig regelt, kann vom Hersteller des Feldhäckslers 1 vorgegeben werden. Dabei können herstellerseitige Vorgaben allerdings nur allgemeine Richtwerte darstellen, die für den einzelnen Anwender nicht notwendigerweise optimal angepasst sind. Grundsätzlich ist es für den Anwender wünschenswert, dass nicht kürzer gehäckselt wird, als unbedingt nötig, weil dies Treibstoffkosten spart. Was aber eine nötige Häcksellänge ist, kann je nach Art der Erntepflanzen, bei einer einzelnen Pflanzenart evtl. sogar in Abhängigkeit von ihren Wachstumsbedingungen variieren, und auch die Möglichkeiten, das Häckselgut anschließend zu verdichten, sind von Bedeutung. So kann ein Benutzer, der ein extrem schweres Fahrzeug zum Verdichten zur Verfügung hat, gröberes Häckselgut verwenden als einer, der nur ein leichtes Fahrzeug zur Verfügung hat.

Um dem Benutzer die Möglichkeit zu geben, die Häcksellänge entsprechend seinen persönlichen Randbedingungen zu optimieren, ist die in Fig. 3 dargestellte Anzeige 24 vorgesehen. Diese weist ein numerisches Anzeigefeld 38 jeweils für den aktuell vom Feuchtigkeitssensor 20 gemessenen Feuchtigkeitswert und die von der Steuerschaltung 22 anhand dieses Messwerts ausgewählte und eingestellte Häcksellänge sowie ein grafisches Anzeigefeld 40 auf, das den von der Steuerschaltung 22 verwendeten Funktionszusammenhang zwischen Feuchtigkeit und Häcksellänge darstellt.

Fig. 3 zeigt die Anzeigefelder 38, 40 nebeneinander, doch kann auch ein einzelnes Anzeigefeld vorgesehen sein, um nach Wahl des Benutzers entweder die numerische oder die grafische Information anzuzeigen.

Im hier betrachteten einfachsten Fall ist der Funktionszusammenhang zwischen Feuchtigkeit und Häcksellänge linear. In diesem Falle gibt es drei Punkte 41 des in dem Feld 40 angezeigten Graphen, einen äußersten linken Punkt, einen mittigen Punkt und einen äußersten rechten Punkt, die der Benutzer mit Hilfe von Rechts-Links-Wähltasten 42 auswählt und anschließend mit Hilfe von Auf-Ab-Tasten 44 verändern kann. Wenn einer der äußeren Punkte ausgewählt ist, ist mit Hilfe der Auf-Ab-Tasten 44 dieser Punkt veränderbar, nicht aber der gegenüberliegende; ist der mittlere Punkt ausgewählt, so wird mit Hilfe der Auf-Ab-Tasten 44 der gesamte Verlauf der Kurve verschoben. So kann ein Benutzer auf einfache Weise die Abhängigkeit der Häcksellänge von dem Feuchtigkeitsgehalt des Ernteguts variieren, wenn er z.B. feststellt, dass die Häcksellänge für trockenes Erntegut geeignet, für feuchtes aber zu groß oder zu klein ist, oder er kann die Häcksellänge insgesamt gröber oder feiner einstellen, wenn die vorgegebene Länge generell zu groß oder zu klein ist.

### Bezugszeichen

- 1: Feldhäcksler
- 4: Fahrwerk
- 6: Fahrzeugrahmen
- 8: Aufnahmevorsatz
- 10: Häckselwerk
- 12: Nachbeschleuniger
- 14: Auswurfkrümmung
- 16: Motor
- 18: (Typ-)Sensor
- 20: Feuchtigkeitssensor
- 22: Steuerschaltung
- 24: Anzeige
- 26: Querförderschnecken
- 28: Einzugs- und Vorpresswalzen
- 30: Häckseltrommel
- 32: Gegenhalter
- 34: Konditionierwalzen
- 36: Nachbeschleuniger
- 38: numerisches Anzeigefeld
- 40: graphisches Anzeigefeld
- 42: Rechts-Links-Wähltasten
- 44: Auf-Ab-Tasten

## Patentansprüche

1. Verfahren zum Zerkleinern von landwirtschaftlichem Erntegut, mit den Schritten
- Erfassen eines Parameters des Ernteguts, der mit dessen Verdichtbarkeit verknüpft ist,
- Wählen einer Teilchengröße für die Zerkleinerung, die um so größer ist, je besser die anhand des erfassten Parameters abgeschätzte Verdichtbarkeit ist, und
- Zerkleinern des Ernteguts auf die gewählte Teilchengröße.

2. Verfahren nach Anspruch 1, **dadurch gekennzeichnet, dass** der Parameter der Feuchtigkeitsgehalt des Ernteguts ist.

3. Verfahren nach Anspruch 1, **dadurch gekennzeichnet, dass** der Parameter die Art des Ernteguts ist.

4. Verfahren nach einem der vorhergehenden Ansprüche , **dadurch gekennzeichnet, dass** der Parameter fortlaufend erfasst und die Teilchengröße an den jeweils aktuell erfassten Parameterwert angepasst wird.

5. Verfahren nach einem der Ansprüche, **dadurch gekennzeichnet, dass** der Parameter in vorgegebenen Zeitabständen erfasst und die Teilchengröße jeweils bei Erfassung eines neuen Parameterwerts angepasst wird.

6. Verfahren nach einem der vorhergehenden Ansprüche, **dadurch gekennzeichnet, dass** die Erfassung des Parameters selbsttätig erfolgt.

7. Vorrichtung (1) zum Zerkleinern von landwirtschaftlichem Erntegut, mit einem Förderkanal für das Erntegut, in dem Förderkanal angeordneten Zerkleinerungswerkzeugen (10), die zum Erzeugen von unterschiedlichen Teilchengrößen des Ernteguts einstellbar sind, und wenigstens einem Sensor (18, 20) zum Erfassen eines mit der Verdichtbarkeit des Ernteguts verknüpften Parameters des Ernteguts, **dadurch gekennzeichnet, dass** eine Steuereinrichtung (22) an den Sensor (18, 20) und an die Zerkleinerungswerkzeuge (10) gekoppelt ist, um die Zerkleinerungswerkzeuge (10) auf eine um so größere Teilchengröße einzustellen, je besser die anhand des vom Sensor (18, 20) erfassten Parameters abgeschätzte Verdichtbarkeit des Ernteguts ist.

8. Vorrichtung nach Anspruch 7, **dadurch gekennzeichnet, dass** der Sensor (18) ein Feuchtesensor ist, und dass die Steuereinrichtung eine um so größere Teilchengröße einstellt, je höher der von dem Feuchtesensor erfasste Feuchtigkeitsgehalt des Ernteguts ist.

9. Vorrichtung nach einem der Ansprüche 7 oder 8, **dadurch gekennzeichnet, dass** unterschiedliche, an die Ernte verschiedener Arten von Erntegut angepasste Typen von Sammelwerkzeug (8) an der Vorrichtung montierbar ist, und dass der Sensor (18) den Typ des Sammelwerkzeugs erfasst.

10. Vorrichtung nach einem der Ansprüche 7 bis 9, **dadurch gekennzeichnet, dass** der Sensor (18, 20) an eine Anzeigeeinrichtung (24) zum Anzeigen des erfassten Parameters gekoppelt ist, und dass die von den Zerkleinerungswerkzeugen (10) erzeugte Teilchengröße durch einen Benutzer einstellbar ist.

11. Vorrichtung nach einem der Ansprüche 7 bis 10, **dadurch gekennzeichnet, dass** der erfasste Parameter eine quantitative Größe ist, und dass ein funktionaler Zusammenhang zwischen dem erfassten Wert des Parameters und der von der Steuereinrichtung anhand des Parameterwerts eingestellten Teilchengröße durch einen Benutzer veränderbar ist.

12. Vorrichtung nach einem der Ansprüche 7 bis 11, **dadurch gekennzeichnet, dass** die Zerkleinerungswerkzeuge (10) wenigstens ein bewegliches Messer umfassen, und dass die Steuereinrichtung (22) die Geschwindigkeit Ω des Messers anhand des erfassten Parameters einstellt.

13. Vorrichtung nach einem der Ansprüche 7 bis 12, **dadurch gekennzeichnet, dass** die Zerkleinerungswerkzeuge (10) wenigstens ein bewegliches Messer (30) sowie Fördereinrichtungen (26, 28) zum Fördern des Ernteguts zu dem Messer (30) umfassen, und dass die Steuereinrichtung (22) die Fördergeschwindigkeit v der Fördereinrichtungen (26, 28) anhand des erfassten Parameters einstellt.

14. Vorrichtung nach einem der Ansprüche 7 bis 13, **dadurch gekennzeichnet, dass** an dem Förderkanal eine auf das von den Zerkleinerungswerkzeugen zerkleinerte Erntegut wirkende Fördereinrichtung (12) angeordnet ist, deren Förderleistung von der Steuereinrichtung (22) anhand des erfassten Parameters geregelt ist.

15. Vorrichtung nach Anspruch 8 und Anspruch 14, **dadurch gekennzeichnet, dass** die Förderleistung um so höher ist, je höher der erfasste Feuchtigkeitsgehalt ist.

16. Vorrichtung nach einem der Ansprüche 7 bis 15, **dadurch gekennzeichnet, dass** sie ein Feldhäcksler ist.

## Revendications

1. Procédé de broyage de produits agricoles de récolte, comportant les étapes suivantes :
- saisie d'un paramètre du produit de récolte qui est corrélé avec la compressibilité de ce produit,
- choix, pour le broyage, d'une grosseur des particules qui est d'autant plus grande que la compressibilité évaluée à l'aide du paramètre saisi est élevée,
- broyage du produit de récolte à la dimension de particules choisie.

2. Procédé selon la revendication 1, **caractérisé en ce que** le paramètre est le taux d'humidité du produit de récolte.

3. Procédé selon la revendication 1, **caractérisé en ce que** le paramètre est le genre du produit de récolte.

4. Procédé selon une des revendications précédentes, **caractérisé en ce que** le paramètre est saisi en continu et la grosseur des particules est ajustée chaque fois à la valeur actuelle du paramètre.

5. Procédé selon une des revendications précédentes, **caractérisé en ce que** le paramètre est saisi à des intervalles de temps prédéfinis et la grosseur des particules est ajustée chaque fois qu'est saisie une nouvelle valeur du paramètre.

6. Procédé selon une des revendications précédentes, **caractérisé en ce que** la saisie du paramètre s'effectue automatiquement.

7. Dispositif pour le broyage de produits agricoles de récolte, comprenant pour le produit de récolte un canal de transport dans lequel sont disposés des outils de broyage (10) pouvant être réglés de manière à produire des particules du produit de récolte présentant différentes grosseurs et au moins un capteur (18, 20) pour saisir un paramètre du produit de récolte en corrélation avec la capacité de compactage du produit de récolte, **caractérisé en ce qu'**un dispositif de commande (22) est couplé avec le capteur (18, 20) et avec les outils de broyage (10) de manière à régler ceux-ci à une grosseur de particules d'autant plus grande que la capacité de compactage du produit de récolte évaluée à l'aide du paramètre saisi par le capteur (18, 20) est élevée.

8. Dispositif selon la revendication 7, **caractérisé en ce que** le capteur (18) est un capteur d'humidité et que le dispositif de commande règle une grosseur de particules d'autant plus grande que la teneur en humidité du produit de récolte, saisie par le capteur, est élevée.

9. Dispositif selon la revendication 7 ou 8, **caractérisé en ce que** des types d'outils collecteurs (8) adaptés aux différents genres de produit de récolte peuvent être montés sur le dispositif, le type de l'outil étant saisi par le capteur (18).

10. Dispositif selon une des revendications 7 à 9, **caractérisé en ce que** le capteur (18, 20) est couplé à un dispositif indicateur (24) faisant apparaître le paramètre saisi, et que la grosseur des particules produites par les outils de broyage (10) peut être réglée par l'utilisateur.

11. Dispositif selon une des revendications 7 à 10, **caractérisé en ce que** le paramètre saisi est une grandeur quantitative et qu'une liaison fonctionnelle entre la valeur saisie du paramètre et la grosseur des particules réglée à partir de la valeur du paramètre par le dispositif de réglage, peut être modifiée par l'utilisateur.

12. Dispositif selon une des revendications 7 à 11, **caractérisé en ce que** les outils de broyage (10) comprennent au moins un couteau mobile et que le dispositif de commande (22) règle la vitesse Ω du couteau à l'aide du paramètre saisi.

13. Dispositif selon une des revendications 7 à 12, **caractérisé en ce que** les outils de broyage (10) comprennent au moins un couteau mobile (30) ainsi que des dispositifs de transport (26, 28) pour amener le produit de récolte au couteau (30), le dispositif de commande (22) réglant la vitesse d'avancement v des dispositifs de transport (26, 28) au moyen du paramètre saisi.

14. Dispositif selon une des revendications 7 à 13, **caractérisé en ce que** dans le canal de transport est monté un dispositif de transport (12) agissant sur le produit de récolte broyé par les outils de broyage, et la vitesse de ce dispositif est régulée par le dispositif de commande (22) à l'aide du paramètre saisi.

15. Dispositif selon la revendication 8 ou la revendication 14, **caractérisé en ce que** la puissance de transport est d'autant plus élevée que la teneur en humidité saisie est élevée.

16. Dispositif selon une des revendications 7 à 15, **caractérisé en ce qu'**il est constitué par une ramasseuse-hacheuse.

## Claims

1. A method of reducing the size of agricultural crop material, comprising the steps:
- detecting a parameter of the crop material, which is linked to the compressibility thereof,
- selecting a particle size for the size reduction operation, which is larger in proportion to better compressibility estimated on the basis of the detected parameter, and
- reducing the crop material to the selected particle size.

2. A method according to claim 1 **characterised in that** the parameter is the moisture content of the crop material.

3. A method according to claim 1 **characterised in that** the parameter is the nature of the crop material.

4. A method according to one of the preceding claims **characterised in that** the parameter is continuously detected and the particle size is adapted to the respectively currently detected parameter value.

5. A method according to one of the preceding claims **characterised in that** the parameter is detected at predetermined time intervals and the particle size is respectively adapted upon the detection of a new parameter value.

6. A method according to one of the preceding claims **characterised in that** detection of the parameter is effected automatically.

7. Apparatus (1) for reducing the size of agricultural crop material, comprising a conveyor passage for the crop material, size-reducing tools (10) which are arranged in the conveyor passage and which are adjustable to produce different particle sizes of the crop material, and at least one sensor (18, 20) for detecting a crop material parameter which is linked to the compressibility of the crop material, **characterised in that** a control device (22) is coupled to the sensor (18, 20) and to the size-reducing tools (10) in order to adjust the size-reducing tools (10) to a particle size which is larger in proportion to better crop material compressibility which is estimated on the basis of the parameter detected by the sensor (18, 20).

8. Apparatus according to claim 7 **characterised in that** the sensor (18) is a moisture sensor and that the control device sets a particle size which is larger in proportion to a higher level of crop material moisture content which is detected by the moisture sensor.

9. Apparatus according to one of claims 7 and 8 **characterised in that** different types of collecting tool (8), adapted to the harvesting of different kinds of crop material, can be mounted to the apparatus, and that the sensor (18) detects the type of collecting tool.

10. Apparatus according to one of claims 7 to 9 **characterised in that** the sensor (18, 20) is coupled to a display device (24) for displaying the detected parameter and that the particle size produced by the size-reducing tools (10) is adjustable by a user.

11. Apparatus according to one of claims 7 to 10 **characterised in that** the detected parameter is a quantitative value and that a functional relationship between the detected value of the parameter and the particle size set by the control device on the basis of the parameter value is variable by a user.

12. Apparatus according to one of claims 7 to 11 **characterised in that** the size-reducing tools (10) include at least one movable blade and that the control device (22) adjusts the speed Ω of the blade on the basis of the detected parameter.

13. Apparatus according to one of claims 7 to 12 **characterised in that** the size-reducing tools (10) include at least one movable blade (30) and conveyor devices (26, 28) for conveying the crop material to the blade (30) and that the control device (22) adjusts the conveyor speed of the conveyor devices (26, 28) on the basis of the detected parameter.

14. Apparatus according to one of claims 7 to 13 **characterised in that** a conveyor device (12) which acts on the crop material which is reduced in size by the size-reducing tools is arranged at the conveyor passage, the conveyor output of the conveyor device being regulated by the control device (22) on the basis of the detected parameter.

15. Apparatus according to claim 8 and claim 14 **characterised in that** the conveyor output is higher in proportion to a higher detected moisture content.

16. Apparatus according to one of claims 7 to 15 **characterised in that** it is a forage harvester.
